# EUROPÄISCHE PATENTSCHRIFT

(11) **EP 2 889 523 B1**
(45) Veröffentlichungstag und Bekanntmachung des Hinweises auf die Patenterteilung: **12.04.2017**
(21) Anmeldenummer: 14188397.5
(22) Anmeldetag: 10.10.2014
(51) Int. Cl.: F16K 31/02

(54) **Vorrichtung zum Betätigen eines Ventils**
Device for actuating a valve
Dispositif destiné à actionner une soupape

(30) Priorität: 11.10.2013 DE 102013016936
(43) Veröffentlichungstag der Anmeldung: 01.07.2015
(73) Patentinhaber: Möhlenhoff GmbH, 38229 Salzgitter (DE)
(72) Erfinder: Seelmann, Christian, 31174 Schellerten (DE); Floren, Christian, 31162 Bad Salzdetfurth (DE)
(74) Vertreter: Döring, Roger

(56) Entgegenhaltungen:
- DE-A1-102004 024 966
- DE-B4- 19 912 610
- DE-U1- 29 905 078

## Beschreibung

Die Erfindung bezieht sich auf eine Vorrichtung zum Betätigen eines Ventils, das einen unter Federeinwirkung stehenden, in seiner Achsrichtung zwischen einer Offenstellung und einer Schließstellung verstellbaren Stößel hat, welche ein Gehäuse aufweist, das in Arbeitsposition an einem mit dem Ventil verbundenen Adapter festgelegt ist, bei welcher in dem Gehäuse ein in Arbeitsposition mit dem Stößel des Ventils gekoppeltes Stellelement und mindestens zwei, in Umfangsrichtung gegeneinander versetzte, stabartige Rasthaken angebracht sind, die parallel zur Achse des Gehäuses verlaufen und in Verriegelungsposition mit an ihren Enden angebrachten Vorsprüngen in eine nutartige Vertiefung des Adapters eingreifen (DE 199 12 610 B4 bzw. DE 299 05 078 U1).

Eine solche Vorrichtung kann ein einfacher, mit einem temperaturabhängigen Dehnkörper ausgerüsteter Thermostat sein. Es kann sich auch um einen sogenannten Stellantrieb handeln, bei dem beispielsweise an einem als Stellelement dienenden temperaturabhängigen Dehnkörper ein elektrischer Heizwiderstand angebracht ist, durch welchen dessen Arbeitskolben gezielt verstellt werden kann. Stellantriebe können daher mittels elektrischen Stroms gesteuert werden. Das gilt auch für Stellantriebe mit anderen temperaturabhängigen Stellelementen und für Stellantriebe, bei denen als Stellelement ein Elektromotor eingesetzt ist. Stellvertretend für alle möglichen Ausführungsformen des Stellelements wird für die Vorrichtung nach der Erfindung ein temperaturabhängig arbeitendes Stellelement berücksichtigt.

Die beschriebenen Vorrichtungen können beispielsweise in der Heizungs- und Lüftungstechnik eingesetzt werden. Sie können grundsätzlich überall dort verwendet werden, wo durch ein Ventil eine Verstellbewegung durchgeführt werden soll. Es können dadurch beispielsweise Klappen bewegt oder lichte Rohrquerschnitte verändert werden. Ohne Einschränkung der allgemeinen Verwendbarkeit der Vorrichtung nach der Erfindung beziehen sich die weiteren Ausführungen auf den Einsatz der Vorrichtung für Ventile einer Warmwasser-Heizungsanlage.

Heizungsanlagen mit Ventilen werden in unterschiedlichen Gebäuden installiert, wie beispielsweise Bürogebäude, Krankenhäuser, Hotels, Mietshäuser oder Villen. Die Ventilen der Heizungsanlagen können - je nach Gebäudetyp - an unterschiedlichen Stellen in Rohrleitungen eingebaut bzw. mit denselben verbunden werden. Solche Stellen sind beispielsweise Heizkreisverteiler, in denen eine größere Anzahl von Ventilen dicht beieinander angeordnet ist, beispielsweise in Schränken. Es kann sich auch um Radiatoren handeln, an denen jeweils nur ein Ventil angebracht ist.

Die Vorrichtungen zum Betätigen von Ventilen sollen grundsätzlich einfach montierbar, aber auch ebenso einfach demontierbar sein. Dabei ist es in vielen Fällen wünschenswert, beispielsweise in Hotels oder Mietshäusern, daß die Vorrichtungen nicht von beliebigen Personen demontiert werden können. Die Gehäuse dieser Vorrichtungen müssen daher so gestaltet werden, daß dieselben nur von Fachleuten zu demontieren sind, nach Möglichkeit mit Spezialwerkzeug. In anderen Fällen, in denen nur Fachleute an die Vorrichtungen herankommen, beispielsweise in Heizkreisverteilern, ist das nicht erforderlich. Die Gehäuse dieser Vorrichtungen sollen schnell demontierbar sein, und zwar möglichst ohne Spezialwerkzeug.

Die bekannte Vorrichtung zum Betätigen eines Ventils nach der eingangs erwähnten DE 199 12 610 B4 weist einen temperaturabhängigen Dehnkörper auf, der einen in seiner Achsrichtung bewegbaren, stirnseitig am Stößel des Ventils anliegenden Arbeitskolben hat. Der Dehnkörper ist in einem Gehäuse angeordnet, welches mittels in seinem Inneren angebrachter, unter Federwirkung stehender Verriegelungselemente lösbar an einem am Ventil angebrachten Adapter festzulegen ist. Im Gehäuse ist in Höhe der innen liegenden Verriegelungselemente jeweils mindestens ein Loch angebracht und außen am Gehäuse ist ein dasselbe teilweise umgreifender, klammerartiger Bügel abnehmbar angeordnet, an dem Stifte angebracht sind, die in Montageposition in die Löcher eingreifen und zumindest annähernd bis zur Anlage an den Verriegelungselementen in das Gehäuse hineinragen. Durch auf den Bügel in Höhe der Stifte ausgeübten Druck werden die Verriegelungselemente so bewegt, daß das Gehäuse auf den Adapter einerseits aufgesetzt und andererseits wieder von demselben abgenommen werden kann.

Der Erfindung liegt die Aufgabe zugrunde, die Handhabung der eingangs geschilderten Vorrichtung zu vereinfachen.

Die Aufgabe wird gemäß der Erfindung dadurch gelöst,
- daß in dem Gehäuse außerdem mindestens zwei in Umfangsrichtung gegeneinander versetzte, stabartige Haltehaken angebracht sind, die am Gehäuse schwenkbar angeordnet sind und parallel zur Achse desselben verlaufen und in Verriegelungsposition mit an ihren Enden angebrachten Vorsprüngen ebenfalls in die nutartige Vertiefung des Adapters eingreifen,
- daß außen an dem Gehäuse ein die aus elastisch verformbarem Material bestehenden Rasthaken und die Haltehaken umgebender, in axialer Richtung verstellbarer Schiebering angebracht ist, der im Ausgangszustand der Vorrichtung unter Freilassung der mit den Vorsprüngen ausgerüsteten Enden von Rasthaken und Haltehaken in einer Ruheposition gehalten ist, und
- daß der beim Aufsetzen des Gehäuses auf den Adapter freigegebene Schiebering nach einer in Richtung des Ventils vorgenommenen axialen Verschiebung in einer Position angeordnet ist, in welcher er die mit ihren Vorsprüngen in die Vertiefung des Adapters eingreifenden Rasthaken und Haltehaken an ihren mit den Vorsprüngen ausgerüsteten Enden unter Anlage an denselben umschließt.

Das Gehäuse dieser Vorrichtung ist ohne zusätzliche Betätigung irgendwelcher Elemente direkt auf ein mit dem Adapter versehenes Ventil aufsetzbar. in dem werksseitig eingestellten Ausgangszustand des Gehäuses befindet sich der Schiebering in einer oberen Position, in welcher er durch einen Haltemechanismus in einer Ruheposition gehalten ist. Wenn das Gehäuse auf den Adapter des Ventils aufgesetzt und gegen dasselbe gedrückt wird, werden die Rasthaken und die Haltehaken durch eine am Adapter angebrachte Gleitfläche mit ihren unteren Enden nach außen bewegt. Bei weiter auf das Gehäuse in Richtung des Ventils ausgeübtem Druck gelangen die Rasthaken und die Haltehaken bis in die Höhe der Vertiefung des Adapters. Die Vorsprünge rasten dann durch die von den elastisch verformbaren Rasthaken aufgebrachte Kraft in die Vertiefung des Adapters ein. Gleichzeitig wird der Haltemechanismus, durch welchen der Schiebering in seiner Ruheposition gehalten ist, freigegeben, so daß der Schiebering in Richtung des Ventiles bewegt werden kann. In seiner Endposition umschließt der Schiebering die Rasthaken und die Haltehaken unter dichter Anlage an denselben an ihren mit dem Adapter verrasteten Enden. Die Vorrichtung bzw. das Gehäuse ist dann fest mit dem Ventil verbunden.

Zur Fixierung des Schieberings in seiner Ruheposition sind als Haltemechanismus die Haltehaken vorgesehen. Beim Aufsetzen des Gehäuses auf den Adapter des Ventils werden die oberen, im Gehäuse liegenden Enden der Haltehaken nach innen in das Gehäuse hineingeschwenkt, so daß der Schiebering freigegeben wird. Er kann dann -wie schon erwähnt - in Richtung des Ventils nach unten bewegt werden.

Das Gehäuse kann auf ebenso einfache Weise wieder von dem Ventil gelöst werden, wenn der Schiebering von Hand nach oben geschoben wird. Dabei werden die Rasthaken und die Haltehaken durch entsprechende Formgebung ihrer Vorsprünge und der Vertiefung des Adapters an ihren unteren Enden nach außen bewegt, so daß die Vorsprünge aus der Vertiefung des Adapters herausgelangen. Gleichzeitig wird die Druckfeder durch den Schiebering wieder zusammengedrückt. Der Schiebering wird dann nach Abnahme des Gehäuses vom Ventil bzw. von dessen Adapter zweckmäßig so weit nach oben geschoben, bis er wieder seine Ruheposition einnimmt. Die Vorrichtung bzw. das Gehäuse befindet sich dann wieder im Ausgangszustand.

Ein Ausführungsbeispiel des Erfindungsgegenstandes ist in den Zeichnungen dargestellt.

Es zeigen:
Fig. 1 in schematischer Darstellung eine an einem Ventil befestigte Vorrichtung nach der Erfindung.
Fig. 2 einen auf einem Ventil montierten Adapter.
Fig. 3 eine Teilansicht des Adapters nach Fig. 2 im Schnitt in vergrößerter Darstellung.
Fig. 4 einen Schnitt durch ein in der Vorrichtung nach der Erfindung verwendbares Gehäuse in schematischer Darstellung.
Fig. 5 ein Einzelteil der Vorrichtung nach Fig. 4 in vergrößerter Darstellung.
Fig. 6 einen Schnitt durch das Gehäuse nach Fig. 4 in einer anderen Ebene.
Fig. 7 und 8 Einzelteile der Vorrichtung nach Fig. 6 in vergrößerter Darstellung.
Fig. 9 eine Teilansicht des Schiebering nach Fig. 8 in vergrößerter Darstellung.
Fig. 10 rein schematisch einen Schnitt durch das Gehäuse nach den Fig. 4 und 6 in einer horizontalen Ebene.
Fig. 11 das Gehäuse der Vorrichtung in seiner Ausgangsstellung.
Fig. 12 und 13 das Gehäuse in zwei unterschiedlichen Positionen in gegenüber Fig. 11 verkleinerter Darstellung.

In der folgenden Beschreibung wird eine Anordnung mit einem temperaturabhängigen Stellelement berücksichtigt, das einen mit einem Arbeitskolben ausgerüsteten Dehnkörper aufweist, so wie er in der eingangs erwähnten DE 199 12 610 B4 beschrieben ist. In der Anordnung können aber auch andere temperaturabhängige Stellelemente eingesetzt werden. Ein solches Stellelement ist beispielsweise ein aus der
EP 1 926 928 B1 hervorgehendes Bauteil aus einer Legierung mit eingeprägtem Formgedächtnis. Das Stellelement kann beispielsweise durch einen elektrischen Widerstand beheizt werden. Ein solcher Widerstand und eine entsprechende Stromzuführung sind in den Zeichnungen nicht mit dargestellt.

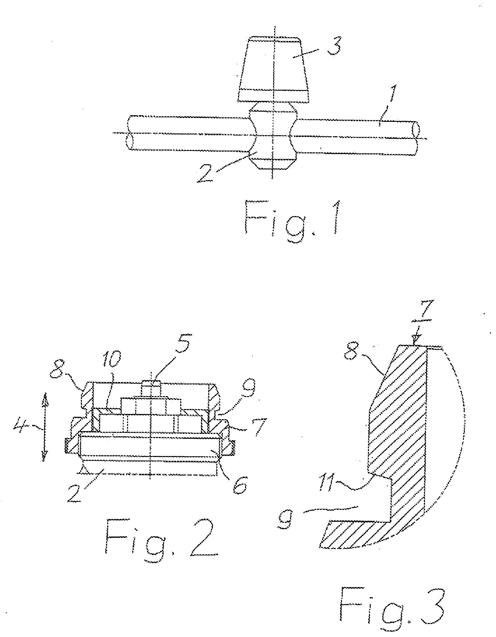

Gemäß Fig. 1 ist in einer Rohrleitung 1, in der beispielsweise Heizungswasser geführt wird, ein Ventil 2 angeordnet. An dem Ventil 2 ist eine Vorrichtung 3 angebracht, mit der die Stellung des Ventils 2 temperaturabhängig gesteuert werden kann. Das Ventil 2 hat gemäß Fig. 2 einen in Richtung des DoppelpfeilS 4 durch eine nicht dargestellte Feder beaufschlagten Stößel 5, der zwischen zwei Endstellungen verstellbar ist. Konzentrisch zum Stößel 5 ist am Ventil 2 im dargestellten Ausführungsbeispiel ein Gewindestutzen 6 angebracht, auf den ein aus einem mechanisch stabilen Kunststoff bestehender Adapter 7 aufgeschraubt ist.

Der Adapter 7 hat entsprechend Fig. 3 in seinem oberen Bereich eine umlaufende konische Gleitfläche 8 und unterhalb derselben eine in bevorzugter Ausführungsform umlaufende nutartige Vertiefung 9, in welche in Montageposition der Anordnung 3 Rasthaken derselben eingreifen. Die Oberkante 11 der Vertiefung 9 verläuft in der Montageposition des Adapters 7 in Richtung der auf das Ventil 2 aufzusetzenden Vorrichtung 3 schräg nach oben. Der Adapter 7 kann nach dem Aufschrauben auf den Gewindestutzen 6 des Ventils 2 durch einen Sicherungsring 10 unverdrehbar am Ventil 2 festgelegt sein.

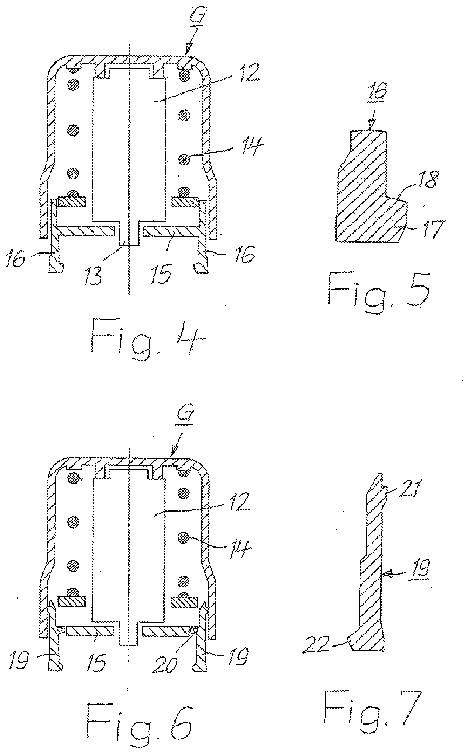

Die Vorrichtung 3 ist in Fig. 4 im Auslieferungsstand bzw. Ausgangszustand dargestellt, so wie sie vom Herstellerwerk ausgeliefert wird. Sie hat ein aus Kunststoff bestehendes Gehäuse G, in dem alle Einzelteile der Anordnung enthalten sind. Von diesen Einzelteilen werden in der folgenden Beschreibung nur diejenigen erwähnt, die für das Verständnis der Vorrichtung und für ihre Handhabung von Bedeutung sind.

Zu den im Gehäuse G angebrachten Einzelteilen gehört ein temperaturabhängiger Dehnkörper 12 mit einem Arbeitskolben 13, der zur direkten oder unter Zwischenschaltung von nicht mit dargestellten Bauteilen zur indirekten Anlage an der Stirnseite des Stößels 5 des Ventils 2 bestimmt ist. Der Dehnkörper 12 ist von einer Druckfeder 14 umgeben, die an ihrem oberen Ende am Gehäuse G abgestützt ist, gegebenenfalls entsprechend der zeichnerischen Darstellung in Fig. 4 unter Zwischenschaltung von Abstandshaltern. Sie wird bei der Verstellung des Stößels 5 des Ventils 2 wirksam.

Zu den Einzelteilen der Anordnung gehört auch ein beispielsweise scheibenartiger Träger 15, an dem Rasthaken 16 schwenkbar angebracht sind. Träger 15 und Rasthaken 16 bestehen aus einem mechanisch stabilen Kunststoff, wie beispielweise einem glasfaserverstärkten Polyamid oder Polycarbonat oder einem beliebigen ABS-Kunststoff. Die Rasthaken 16 sind stabartig ausgeführt und elastisch verformbar. Sie haben gemäß Fig. 5 an ihren aus dem Gehäuse G herausragenden Enden Vorsprünge 17, die in Montageposition in die Vertiefung 9 des Adapters 7 eingreifen. Die Oberkante 18 der Vorsprünge 17 verläuft vom Gehäuse G wegweisend schräg nach unten. Sie liegt in Montageposition an der Oberkante 11 der Vertiefung 9 des Adapters 7 an.

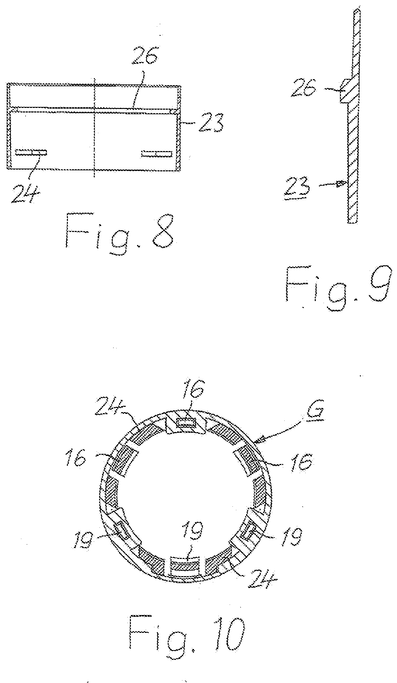

Im Gehäuse G sind außer den Rasthaken 16 mindestens zwei aus Fig. 6 ersichtliche, einen Haltemechanismus bildende Haltehaken 19 angebracht, die in Umfangsrichtung des Gehäuses G gegeneinander versetzt sind. Sie verlaufen parallel zu den Rasthaken 16 und sind gegenüber denselben in Umfangsrichtung des Gehäuses G versetzt. Die Haltehaken 19 sind ebenfalls einteilig mit dem Träger 15 verbunden, und zwar über schematisch angedeutete Schwenklager 20, welche eine Art Torsionsverbindung zwischen dem Träger 15 und den Haltehaken 19 bilden. Die Haltehaken 19 verlaufen gemäß Fig. 6 ebenso wie die Rasthaken 16 parallel zur Achse des Gehäuses G. Diese Position der Haltehaken 19 wird von denselben aus eigener Kraft durch die Anbindung an den Träger 15 gehalten bzw. immer wieder eingenommen, solange sie nicht durch eine andere, auf sie einwirkende Kraft aus derselben ausgelenkt werden. In Fig. 6 sind zwei Haltehaken 19 zu erkennen. Es sollen mit Vorteil mindestens drei in Umfangsrichtung gegeneinander versetzte Haltehaken 19 schwenkbar am Träger 15 angebracht sein, so wie es in Fig. 10 angedeutet ist.

Jeder Haltehaken 19 hat gemäß Fig. 7 in seinem oberen Bereich einen von demselben abstehenden Ansatz 21 mit einer oben liegenden ebenen Auflagefläche und einer unter einem spitzen Winkel zur Auflagefläche schräg verlaufenden Unterkante sowie an seinem unteren Ende einen in Gegenrichtung zum Ansatz 21 weisenden Haken 22.

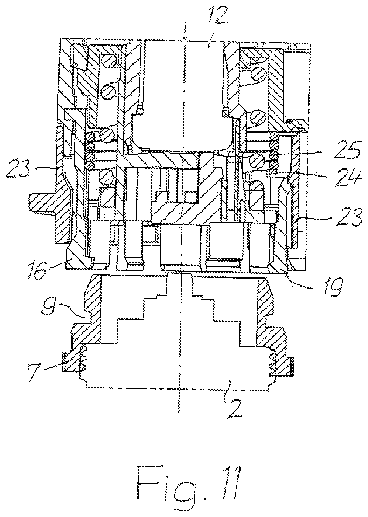

Außen ist am Gehäuse G ein dasselbe rundum umgebender Schiebering 23 angebracht, der in axialer Richtung verschiebbar ist. Der Schiebering 23 hat gemäß Fig. 8 in Umfangsrichtung gegeneinander versetzte, von seiner inneren Oberfläche rechtwinklig abstehende konsolenartige Auflagen 24, welche in das Gehäuse G hineinragen und in den Fig. 11 bis 13 nur angedeutet sind. Auf den Auflagen 24 liegt im Montagezustand der Vorrichtung 3 im dargestellten Ausführungsbeispiel eine Stellfeder 25 mit ihrem unteren Ende auf. Die mit Vorteil als Schraubenfeder ausgebildete Stellfeder 25 ist mit ihrem oberen Ende am Gehäuse G abgestützt. Sie ist konzentrisch zur Achse des Gehäuses G angeordnet und umgibt dessen Einbauten rundum, also auch die Druckfeder 14. Sie liegt damit nahe an der inneren Oberfläche des Schieberings 23, zu dem sie ebenfalls konzentrisch verläuft.

Der Schiebering 23 hat außerdem in seinem oberen Bereich eine von seiner inneren Oberfläche abstehende, umlaufende Rippe 26, die im Ausgangszustand der Vorrichtung mit einer ebenen unteren Fläche (Fig. 9) auf den Ansätzen 21 der Haltehaken 19 aufliegt. In diesem Ausgangszustand befindet sich der Schiebering 23 in seiner Ruheposition, in welcher er durch die Haltehaken 19 bzw. deren Ansätze 21 gehalten ist. Die auf den Auflagen 24 des Schieberings 23 aufliegende Stellfeder 25 ist dabei zusammengedrückt, also gespannt.

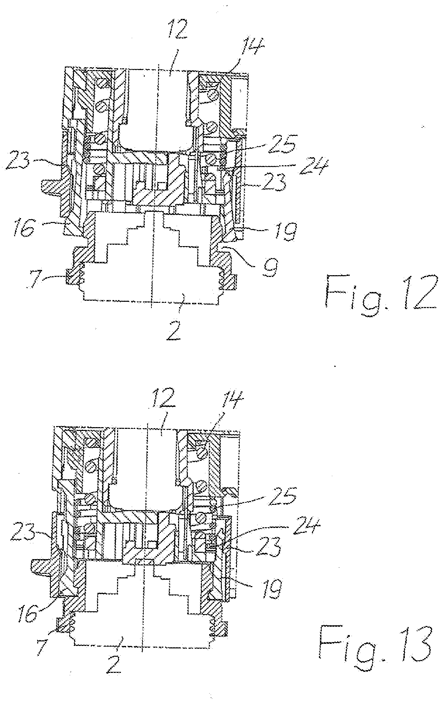

Zum Erreichen der Arbeitsposition der Vorrichtung 3 wird das Gehäuse G mit den darin befindlichen, beschriebenen Einzelteilen auf den bereits am Ventil 2 angebrachten Adapter 7 aufgesetzt und in Richtung des Ventil 2 gedrückt. Diese Position des Gehäuses G geht aus Fig. 12 hervor. Bei diesem Vorgang werden sowohl die Rasthaken 16 (Fig. 12 links) als auch die Haltehaken 19 (Fig. 12 rechts) durch die konische Gleitfläche 8 des Adapters 7 nach außen gedrückt. Die Rasthaken 16 werden bei dieser Aktion elastisch verformt und die Haltehaken 19 werden um ihre Schwenklager 20 am Träger 15 geschwenkt. Dadurch werden die oberen Enden der Haltehaken 19 in das Gehäuse G hinein bewegt, so daß ihre Ansätze 21 aus dem Bereich der Rippe 26 des Schieberings 23 entfernt werden. Der Schiebering 23 wird dadurch freigegeben. Er kann dann von Hand oder unter der Wirkung der Stellfeder 25 in Richtung des Ventils 2 nach unten bewegt werden. Die Stellfeder 25 wird zur Verstellung des Schieberings 23 nicht unbedingt benötigt. Sie ist aber bei bestimmten Einbaupositionen der Vorrichtung 3 von Vorteil, weil sie eine automatische Verstellung des Schieberings 23 bewirken kann. Außerdem hält die gemäß Fig. 13 verlängerte Stellfeder 25 den Schiebering 23 zusätzlich in seiner Montageposition, weil sie auf dessen Auflagen 24 drückt.

Wenn weiter von oben auf das Gehäuse G gedrückt wird, rasten die Rasthaken 16 mit ihren Haken 17 in die Vertiefung 9 des Adapters 7 ein (Fig. 13 links). Auch die Haltehaken 19 greifen dann in die Vertiefung 9 des Adapters 7 ein (Fig. 13 rechts). Das Gehäuse G hat danach die insgesamt aus Fig. 13 hervorgehende Verriegelungsposition erreicht, in welcher der Schiebering 23 so weit nach unten gedrückt ist, daß er die Rasthaken 16 unter Anlage an denselben und auch die Haltehaken 19 umgibt.

Wenn das Gehäuse G wieder vom Ventil 2 abgenommen werden soll, aus welchen Gründen auch immer, wird der Schiebering 23 vom Ventil 2 wegweisend nach oben geschoben. Dadurch werden sowohl die Rasthaken 16 als auch die Haltehaken 19 freigegeben. Wenn beim Hochdrücken des Schiebering 23 gleichzeitig am Gehäuse G gezogen wird, werden die Vorsprünge 17 der Rasthaken 16 mit ihren schrägen Oberkanten 18 an die schräge Oberkante 11 der Vertiefung 9 des Adapters 7 gedrückt. Sie gleiten dann an der schrägen Fläche der Vertiefung 9 entlang nach außen.

Gleichzeitig drückt die Rippe 26 des Schiebering 23 mit ihrer unter einem spitzen Winkel zu ihrer unteren Fläche schräg verlaufenden Oberkante (Fig. 9) gegen die Ansätze 21 der Haltehaken 19, wodurch dieselben mit ihrem oberen Bereich in das Gehäuse G hineingeschwenkt werden. Dabei werden auch die Haken 22 der Haltehaken 19 aus der Vertiefung 9 des Adapters 7 herausgeschwenkt. Das Gehäuse G kann dann vom Ventil 2 abgenommen werden.

Der Schiebering 23 wird danach zweckmäßig weiter nach oben gedrückt, bis seine Rippe 26 über den Ansätzen der Haltehaken 19 liegt, welche dann aus eigener Kraft in ihre Ausgangsstellung gemäß Fig. 6 zurückschwenken. Wenn der Schiebering 23 dann losgelassen wird, kommt die untere Fläche seiner Rippe 26 wieder zur Anlage an den Auflageflächen der Ansätze 21 der Haltehaken 19. Er wird dann wieder bei gegebenenfalls wieder zusammengedrückter Stellfeder 25 in der aus den Fig. 4 und 6 ersichtlichen Ausgangsstellung gehalten. Die Vorrichtung 3 hat danach wieder ihre aus Fig. 11 ersichtliche Ausgangsposition.

## Patentansprüche

1. Vorrichtung (3) zum Betätigen eines Ventils (2), das einen unter Federeinwirkung stehenden, in seiner Achsrichtung zwischen einer Offenstellung und einer Schließstellung verstellbaren Stößel (5) hat, welche einen mit dem Ventil verbundenen Adapter und ein Gehäuse (G) aufweist, das in Arbeitsposition an dem Adapter (7) festgelegt ist, bei welcher in dem Gehäuse (G) ein in Arbeitsposition mit dem Stößel (5) des Ventils (2) gekoppeltes Stellelement (12) und mindestens zwei, in Umfangsrichtung gegeneinander versetzte, stabartige Rasthaken (16) angebracht sind, die parallel zur Achse des Gehäuses (G) verlaufen und in Verriegelungsposition mit an ihren Enden angebrachten Vorsprüngen (17) in eine nutartige Vertiefung (9) des Adapters (7) eingreifen, wobei
- in dem Gehäuse (G) außerdem mindestens zwei in Umfangsrichtung gegeneinander versetzte, stabartige Haltehaken (19) angebracht sind, die am Gehäuse (G) schwenkbar angeordnet sind und parallel zur Achse desselben verlaufen und in Verriegelungsposition mit an ihren Enden angebrachten Vorsprüngen (22) ebenfalls in die nutartige Vertiefung (9) des Adapters (7) eingreifen,
**dadurch gekennzeichnet,**
- **daß** außen an dem Gehäuse (G) ein die aus elastisch verformbarem Material bestehenden Rasthaken (16) und die Haltehaken (19) umgebender, in axialer Richtung verstellbarer Schiebering (23) angebracht ist, der im Ausgangszustand der Vorrichtung (3) unter Freilassung der mit den Vorsprüngen (17, 22) ausgerüsteten Enden von Rasthaken (16) und Haltehaken (19) in einer Ruheposition gehalten ist, und
- **daß** der beim Aufsetzen des Gehäuses (G) auf den Adapter (7) freigegebene Schiebering (23) nach einer in Richtung des Ventils (2) vorgenommenen, axialen Verschiebung in einer Position angeordnet ist, in welcher er die mit ihren Vorsprüngen (17,22) in die Vertiefung (9) des Adapters (7) eingreifenden Rasthaken (16) und Haltehaken (19) an ihren mit den Vorsprüngen (17,22) ausgerüsteten Enden unter Anlage an denselben umschließt.

2. Vorrichtung nach Anspruch 1, **dadurch gekennzeichnet, daß** der Adapter (7) an seinerin Montageposition dem aufzusetzenden Gehäuse (G) zugewandten Stirnseite zur Bildung einer umlaufenden Gleitfläche (8) ko nisc h verjüngt ist.

3. Vorrichtung nach Anspruch 1, **dadurch gekennzeichnet, daß** die Oberkante (11) der Vertiefung (9) des Adapters (7) in seine r Montageposition in Richtung des aufzusetzenden Gehäuses (G) schräg nach oben verläuft.

4. Vorrichtung nach Anspruch 1, **dadurch gekennzeichnet, daß** die Oberkanten der Vorsprünge (17) der Rasthaken (16) einerseits und der Haltehaken (19) and ererseits vom Gehäuse (G) wegweisend jeweils schräg nach unten verläuft.

5. Vorrichtung nach einem der Ansprüche 1 bis 4, **dadurch gekennzeichnet, daß** der Schiebering (23) in seinerRuheposition durch die Haltehaken (19) gehalten ist, die schwenkbaram Träger (15) der Vorrichtung (3) angebracht sind.

6. Vorrichtung nach Anspruch 5, **dadurch gekennzeichnet,**
- **daß** die Haltehaken (19) in ihrem in Gebrauchslage oberen Bereich jeweils einen nach außen abstehenden Ansatz (21) haben und
- **daß** am Schiebering (23) in seinem in Gebrauchslage oberen Bereich an seiner inneren Oberfläche eine umlaufende Rippe (26) angebracht ist, die im Ausgangszustand der Vorrichtung auf den Ansätzen (21) der Halte haken (19) aufliegt.

7. Vorrichtung nach einem der Ansprüche 1 bis 6, **dadurch gekennzeichnet, daß** der Schiebering (23) rechtwinklig von demselben abstehende, in das Gehäuse (G) hine inragende Auflagen (24) hat, auf welchen eine als Schraubenfeder ausgeführt Stellfeder (25) mit einem Ende aufliegt, die konzentrisch zum Schiebering (23) verläuft und mit ihrem anderen Ende am Gehäuse (G) abgestützt ist.

## Claims

1. Apparatus (3) for actuating a valve (2) which has a tappet (5) which is under the action of a spring, can be adjusted between an open position and a closed position in its axial direction and has an adapter which is connected to the valve and a housing (G) which is fixed on the adapter (7) in the operating position, in the case of which apparatus (3) an actuating element (12) which is coupled to the tappet (5) of the valve (2) in the operating position and at least two rod-like latching hooks (16) which are offset in the circumferential direction with respect to one another are attached in the housing (G), which latching hooks (16) run parallel to the axis of the housing (G) and, in the locking position, engage into a groove-like depression (9) of the adapter (7) by way of projections (17) which are attached to their ends, at least two rod-like holding hooks (19) which are offset in the circumferential direction with respect to one another being attached, moreover, in the housing (G), which holding hooks (19) are arranged pivotably on the housing (G) and run parallel to the axis thereof and, in the locking position, likewise engage into the groove-like depression (9) of the adapter (7) by way of projections (22) which are attached to their ends, **characterized in**
- **that** a sliding ring (23) which surrounds the latching hooks (16) which consist of elastically deformable material and the holding hooks (19) and can be adjusted in the axial direction is attached on the outside of the housing (G), which sliding ring (23), in the starting state of the apparatus (3), is held in a rest position with the liberating of the ends of the latching hooks (16) and holding hooks (19) which are equipped with the projections (17, 22), and
- **that** the sliding ring (23) which is released during the placing of the housing (G) onto the adapter (7) is arranged in a position after an axial displacement which is performed in the direction of the valve (2), in which position it encloses the latching hooks (16) and holding hooks (19) which engage with their projections (17, 22) into the depression (9) of the adapter (7), at their ends which are equipped with the projections (17, 22), with contact against the said latching hooks (16) and holding hooks (19).

2. Apparatus according to claim 1, **characterized in that** the adapter (7) is conically tapered in order to form a circumferential sliding face (8) on its end side which faces the housing (G) to be placed onto it in its mounting position.

3. Apparatus according to claim 1, **characterized in that** the upper edge (11) of the depression (9) of the adapter (7) runs obliquely upwards in the direction of the housing (G) to be placed onto it in its mounting position.

4. Apparatus according to claim 1, **characterized in that** the upper edges of the projections (17) of the latching hooks (16) on one side and the holding hooks (19) on the other side in each case run obliquely downwards in a manner which points away from the housing (G).

5. Apparatus according to one of claims 1 to 4, **characterized in that** the sliding ring (23) is held in its rest position by way of the holding hooks (19) which are attached pivotably on the carrier (15) of the apparatus (3).

6. Apparatus according to claim 5, **characterized in**
- **that** the holding hooks (19) in each case have an outwardly protruding projection (21) in their upper region in the use position, and
- **that** a circumferential rib (26) is attached on the sliding ring (23) on its inner surface in its upper region in the use position, which rib (26) lies on the projections (21) of the holding hooks (19) in the starting state of the apparatus.

7. Apparatus according to one of claims 1 to 6, **characterized in that** the sliding ring (23) has supports (24) which project at right angles from it, protrude into the housing (G), and on which an actuating spring (25) which is configured as a helical spring lies with one end, which actuating spring (25) runs concentrically with respect to the sliding ring (23) and is supported with its other end on the housing (G).

## Revendications

1. Dispositif (3) destiné à actionner une soupape (2) qui présente une tige poussoir (5) soumise à l'action d'un ressort, pouvant être déplacée dans sa direction axiale entre une position ouverte et une position fermée, qui présente un adaptateur connecté à la soupape et un boîtier (G) qui est fixé dans la position de travail sur l'adaptateur (7), un élément de commande (12) accouplé à la tige poussoir (5) de la soupape (2) et au moins deux crochets d'encliquetage de type ergot (16), décalés l'un par rapport à l'autre dans la direction périphérique, étant montés dans le boîtier (G), s'étendant parallèlement à l'axe du boîtier (G) et s'engageant dans la position de verrouillage avec des saillies (17) montées à leurs extrémités dans un renfoncement de type rainure (9) de l'adaptateur (7), au moins deux crochets de retenue de type ergot (19), décalés les uns par rapport aux autres dans la direction périphérique, étant en outre montés dans le boîtier (G), étant disposés de manière à pouvoir pivoter sur le boîtier (G), s'étendant parallèlement à l'axe de ce dernier et dans la position de verrouillage s'engageant également avec des saillies (22) montées à leurs extrémités dans le renfoncement de type rainure (9) de l'adaptateur (7), **caractérisé en ce**
- **que** une bague coulissante (23) déplaçable dans la direction axiale et entourant les crochets d'encliquetage (16) constitués d'un matériau déformable élastiquement et les crochets de retenue (19), est montée à l'extérieur sur le boîtier (G) et est retenue dans une position de repos dans l'état initial du dispositif (3) en laissant libre les extrémités munies des saillies (17, 22) des crochets d'encliquetage (16) et des crochets de retenue (19), et
- **que** la bague coulissante (23), libérée lors du positionnement du boîtier (G) sur l'adaptateur (7), après un déplacement axial effectué dans la direction de la soupape (2), est disposée dans une position dans laquelle elle entoure les crochets d'encliquetage (16) et les crochets de retenue (19) s'engageant avec leurs saillies (17, 22) dans le renfoncement (9) de l'adaptateur (7), au niveau de leurs extrémités munies des saillies (17, 22) en s'appliquant contre celles-ci.

2. Dispositif selon la revendication 1, **caractérisé en ce que** l'adaptateur (7), au niveau de son côté frontal tourné vers le boîtier à poser (G) dans la position de montage, se rétrécit de manière conique pour former une surface de glissement périphérique (8).

3. Dispositif selon la revendication 1, **caractérisé en ce que** l'arête supérieure (11) du renfoncement (9) de l'adaptateur (7) s'étend obliquement vers le haut dans sa position de montage dans la direction du boîtier à poser (G).

4. Dispositif selon la revendication 1, **caractérisé en ce que** les arêtes supérieures des saillies (17) des crochets d'encliquetage (16) d'une part et des crochets de retenue (19) d'autre part, s'étendent à chaque fois obliquement vers le bas à l'écart du boîtier (G).

5. Dispositif selon l'une quelconque des revendications 1 à 4, **caractérisé en ce que** la bague coulissante (23) est retenue dans sa position de repos par les crochets de retenue (19) qui sont montés de manière à pouvoir pivoter au niveau du support (15) du dispositif (3).

6. Dispositif selon la revendication 5, **caractérisé en ce**
- **que** les crochets de retenue (19) présentent, dans leur région supérieure, dans la position d'utilisation, à chaque fois une projection saillant vers l'extérieur (21) et
- **que** une nervure périphérique (26) est montée sur la bague coulissante (23) dans sa région supérieure dans la position d'utilisation au niveau de sa surface intérieure, laquelle s'applique dans l'état initial du dispositif contre les projections (21) des crochets de retenue (19).

7. Dispositif selon l'une quelconque des revendications 1 à 6, **caractérisé en ce que** la bague coulissante (23) présente des appuis (24) faisant saillie à angle droit depuis celle-ci, pénétrant dans le boîtier (G), sur lesquels repose, par une extrémité, un ressort de réglage (25) réalisé sous forme de ressort à boudin, lequel s'étend concentriquement par rapport à la bague coulissante (23) et est supporté avec son autre extrémité sur le boîtier (G).
